# EUROPEAN PATENT APPLICATION

(11) **EP 4 660 732 A1**
(43) Date of publication of application: **10.12.2025**
(21) Application number: 24179937.8
(22) Date of filing: 04.06.2024
(51) Int. Cl.: G05B 23/02

(54) **MONITORING CIRCUIT, METHOD TO MONITOR A PRODUCTION PLANT AND COMPUTER PROGRAM**

(71) Applicant: Yokogawa Electric Corporation, Musashino-shi, Tokyo 180-8750 (JP)
(72) Inventor: HURINK, Frank, 3825 HD Amersfoort (NL); UNWIN, Neil, 3825 HD Amersfoort (NL)
(74) Representative: Zimmermann, Tankred Klaus

(57) **Abstract**

A monitoring circuit (100) comprises at least one interface (102) for obtaining status data (110) of a plurality of sensors or actuators (106) and for communicating with a remote server (108). Processing circuitry (104) of the monitoring circuit (100) is configured to obtain a plurality of units of status data (110) of the plurality of sensors or actuators (106), the plurality of sensors or actuators (106) being part of machinery or being arranged in an environment of the machinery. The processing circuitry (104) is further configured to transform the plurality of units of status data (110) in an event data stream (112) comprising a plurality of events. An event comprises information on at least one unit of status data (110). Further, the processing circuitry is further configured to provide the event data stream (112) to the remote server (108).

## Description

### Field

Examples relate to a monitoring circuit, to a method to monitor a production plant and to a computer program.

### Background

An industrial production plant, also known as a processing plant, is a large, structured facility where goods are produced or processed on a significant scale. The plants are typically equipped with specialized machinery and technology designed for the specific type of production or processing taking place. Industrial production plants may employ a variety of production processes, including assembly lines, batch production, or continuous production, depending on the nature of the product and the production goals. The production processes rely on a specific order of production steps to be performed while the machinery contributing to the production of a single end product may be provided by different manufacturers. If one production step is impossible due to machinery breakdown, the entire production may come to a stop. Due to the production steps depending on one another, even a minor change of an operating parameter of one machine may result in a failure of another machine used for a subsequent production step. For example, if a tolerance of a part processed by a first machine changes slightly or even systematically due to wear or misalignment of the first machine, a subsequent machine may add to the tolerance in a previously irrelevant manner so as to result with an end product being out of tolerance and, hence, waste. Individual machines may provide proprietary data about their present status, e.g. by providing sensor readings of some operating parameters or by providing data regarding the operation mode or position of actuators used within the machines to perform operation.

Due to the complex interrelations between machinery used within an industrial production process it is desirable to maintain an overview of the entire machinery involved to avoid stop of production or a high percentage of defective goods.

Hence, there may be the associated desire for an improved concept for handling status data of sensors or actuators of machinery or of an environment the machinery is operating in.

### Summary

This desire is addressed by the subject-matter of the independent claims.

An embodiment of a monitoring circuit comprises at least one interface for obtaining status data of a plurality of sensors or actuators being part of machinery or being arranged in an environment of the machinery. The at least one interface further serves to communicate with a remote server. Processing circuitry of the monitoring circuit is configured to obtain a plurality of units of status data of the plurality of sensors or actuators and to transform the plurality of units of status data in an event data stream comprising a plurality of events. An event comprises information on at least one unit of status data or it may likewise comprise information received by means of two or more units of status data. The event data stream is provided or transmitted to the remote server. In transforming the information received about the machinery or the environment of the machinery by means of the units of status data into events, an observer may be enabled to maintain an overview of all machinery used within a production plant based on a single universal data format, while the status data may be received in multiple proprietary data formats.

In some embodiments, the processing circuitry may hence be capable to obtain the plurality of units of status data in at least a first data format or a different second data format. Supporting multiple input data formats may enable an implementer or user of the monitoring circuit to monitor and control all relevant machinery using a single application or visualization, irrespective of the manufacturer of a machine or of the data format or protocol used by a machine to provide status data about its components or actuators.

In various examples, the processing circuitry may be further configured to include a timestamp associated to the status data into the events. Including a timestamp indicative of the time the status data was generated or received may enable a user to conclude on correlations between status changes of different machines in the plant, which would otherwise not be easily visible if the status data is monitored on a per machine basis.

In some embodiments, the processing circuitry may be further configured to generate an event in the event data format upon a change of status data of an individual sensor or actuator. This may serve to save bandwidth consumed by the event data stream since an event is only generated when a parameter or a status of a machine changes. This may also enable to more easily monitor an entire production plant since information is only made available upon change in a status, avoiding the repeated display of an identical status.

In some examples, the processing circuitry may optionally be further configured to include status data from before the change and from after the change into the event. This may enable to more easily monitor machinery in almost real time since the status before the change is also (re-) transmitted within an event, making it unnecessary to search backwards for a preceding event comprising the information on the status data before the change happened.

In various examples, the processing circuitry may be further configured to include event type information into an event, the event type information indicating at least one category of a number of available event categories. The event type information describes the nature of the event. This may enable a user of the remote server to filter on the event types or to only subscribe to a subset of the available event categories to be processed or displayed. Further, a software or a program running on the remote server may be universally usable, configuring itself of the events to display by monitoring and analyzing the event data stream for a determined time interval to learn on the event types present in the event data stream.

In various examples, the processing circuitry may be further configured to include meta data into the event data format, the meta data indicating at least one of a format, a range, an order or a data type of the status data of the sensor or the actuator. A software or a program running on the remote server may so be universally usable, configuring itself of the data and the representation of the data to be displayed/monitored by monitoring and analyzing the event data stream itself.

In various examples, the processing circuitry may be further configured to provide the event data format to the remote server as a series of the events in an order given by the timestamps. The processing circuitry so provides a timely ordered stream of events, presenting and submitting the status data in the order of its generation or occurrence, eventually enabling a user of the system or software running at the remote server to realize correlations between events for the same or even from different machines that may otherwise remain unnoticed.

### Brief description of the Figures

Some examples of apparatuses and/or methods will be described in the following by way of example only, and with reference to the accompanying figures, in which
Fig. 1 illustrates a schematic view of a monitoring circuit according to an embodiment;
Fig. 2 illustrates a schematic view of a further monitoring circuit comprising some examples for sources of status data and including implementational aspects of the monitoring circuit; and
Fig. 3 illustrates a flowchart of an embodiment of a method to monitor a production plant.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

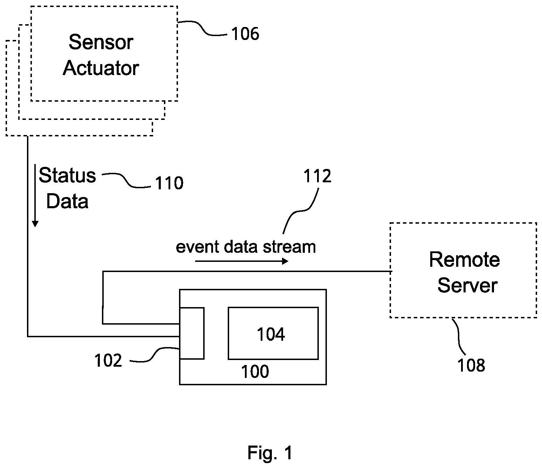

Fig. 1 illustrates a schematic view of a monitoring circuit 100 according to an embodiment discussed herein. The monitoring circuit 100 comprises an interface 102 for obtaining status data 110 of a plurality of sensors or actuators 106 and for communicating with a remote server 108. Said interface 102 may use an arbitrary number and combination of communication standards. For example, the monitoring circuit 100 may communicate with the remote server 108 via the internet. To this end, the interface 102 may support LAN or WLAN communication to access a local network and associated infrastructure such as network routers to route the traffic from the monitoring circuit 100 to the remote server 108. For communication with the sensors or actuators 106, additionally or alternatively, further communication media and protocols may be supported, such as für example a Controller Are Network (CAN), or an RS232 Interface.

Processing circuitry 104 obtains a plurality of units of status data 110 of the plurality of sensors or actuators 106, the plurality of sensors or actuators 106 being part of machinery or arranged in an environment of the machinery. The processing circuitry 104 transforms the plurality of units of status data 106 in an event data stream 112 comprising a plurality of events. An event comprises information on at least one unit of status data. Processing circuitry 104 provides the event data stream 112 to the remote server 108 using interface 102. An event comprises information on at least one unit of status data. By transforming the status data or information received about the machinery or the environment of the machinery (which may be received in multiple proprietary data formats), into events, an observer may be able to maintain an overview of all machinery used within a production plant based on a single universal data format. The plurality of status data can be received from multiple different machines, sensors or actuators in an arbitrary data format. The status data can be made received using arbitrary communication protocols. For example, status data may be polled by the monitoring circuit 100 from the sensors or actuators 106. Alternatively, some sensors or actuators may push the status data to the monitoring circuit 100 in fixed time intervals or upon change of a status represented by the status data.

Optionally, the processing circuitry includes a timestamp associated to the status data into the events. Depending on the implementation and the status data received, the timestamp may indicate the time the status data underlying an event is generated or the time, the status data is received by the monitoring circuit 100. The processing circuitry 104 may optionally further be configured to provide the event data format to the remote server as a series of the events in an order given by the timestamps to not require the remote server to reorder the events for presentation. Associated buffers and processing may so be saved at the remote server.

Using an example of a monitoring circuit 100 generating events, the stream of events can, for example, be visually represented using methods similar to timeline-based applications such as trend displays, movie players and social media notifications. This enables correlations between events of the same type or even between different types to be identifiable quicker and more reliable as compared to an analysis of data of conventional monitoring systems.

An industrial control system has many hardware and software components operating in concert and operation of a plant requires an operator to be notified of significant changes and abnormalities in the operational status of the controlled process and machinery. Conventionally, these notifications are provided in the form of process alarms that are shown to the operator through a user interface. A process alarm reflects a situation of sufficient importance so as to require immediate notification. By a process alarm, a user can be informed in a timely manner of abnormal process conditions regardless of his present activity and take corrective action. International standard ISA 18.2 describes alarm management practices. However, process alarms of isolated machinery do not give an overview of the state of the entire production plant. Therefore, many events that may precede a subsequent failure may remain unnoticed. Examples of events that are not causing a process alarm but that are nonetheless important because they may relate to or even cause a subsequent error within the system include the following events, the list being non exhaustive. Events may be based on status data describing automated decisions and actions recorded in application software logs. Events may also be caused by changes to application engineering configuration files and databases. Events of a different event type may be generated for application security, authorization and authentication. Events may be also based on status data indicating or having information recorded in operating system logs including but not limited to notifications from operating system logic, security logs and system error messages. An event of another event type may be generated upon a change in online and offline transitions of hardware components. Upon receipt of status data indicating one of those events, an event may be generated in the event data stream by the monitoring circuit 100.

Generally speaking, any change in one or more of a machine's or of a system's own component or of the environment in which a machine is operated can be considered an event. An event may be generated in a fixed data format using a predetermined semantic, irrespective of the source of the status data. A single instance of an event has only relevance within its own context of use, but when combined with events from other interacting components, they may jointly describe a flow of system behavior and hence be representative for the state of the entire system. A correlation between events may indicate whether the status is normal or abnormal and illustrate a progression in the direction of the system that will eventually reach a specific behavioral condition at some point in the future.

For example, an important observation for safety related incidents is that they do often not have a single root cause that is causing the safety related incident but that multiple (simultaneous) causes result in such an incident. Not all of these causes will manifest themselves as a process alarm to which the operator can take action. Having the ability to see the occurrence of events from multiple systems, eventually even in the order of their occurrence, can assist in forensic analysis for fault finding post-mortem, or contribute to incident prevention in the future.

While conventional systems may describe methods of acquiring, storing, processing and presenting information on a per data source basis, they do not allow to perform an analysis and a monitoring of multiple data sources in the previously described manner. Conventionally gathered information may be stored in time-series order in a database. The time-series data can be presented on demand by a human machine interface and the same data can be referenced later, either online or offline, for further analysis and optimization. However, in conventional approaches, a user or a monitoring application requires prior knowledge to select and request the type of data recorded from a specific machine, actuator or sensor, before it can be used. That is, data is only presented or reported upon selection of a data source and on-demand by querying the data source or selecting from a specific category of data. This means that an interest in a data source or in a subset of that data source must be expressed before status data can be read. Even if a mechanism of near real-time reporting by exception is employed to update selected data once the data changes, the data source would still be required to be preselected before information about it is shown. This means any change of data or event messages generated outside the scope of the selected data source are not immediately reported to the user. Conventional status data recording may so serve as a data source for post-mortem analysis, when specific information is required, and the required data sources are already well known. However, the conventional approach is unsuitable for near real-time monitoring when the moment at which a data source generates an event of significance is not yet known.

Also, it is hardly feasible to identify correlations between different events if the data is stored separately for each data source as in the conventional systems. The relative time order of messages and data changes from different data sources is not immediately apparent. The sequence in which events occur and the timing between them can, however, be an important measure of correct plant operation and performance. Once recorded, it can also be valuable information for post-mortem analysis in case of an incident or for improving the flow of standard operating procedures.

In contrast thereto, by providing data from multiple sources as an event data stream of time-ordered events using a common format overcomes the previously named drawbacks and provides the following benefits.

Providing events as an unsolicited stream of events in time order using a monitoring circuit eases the implementation of an application software program at a remote server for the purposes of presenting data, managing a notification device or storage for later use. No demand polling or subscription information needs to be managed for multiple data sources. Application software programs have the benefit of requiring no knowledge about the location and access methods of the originating data sources in order to receive streamed events. Once events have been obtained by the application software program, events can be presented using common methods such as chronological timelines, trends and logs. The time-ordered nature of events allows for replay and fast-forward of events or provide push notifications as they happen.

Using an event data stream allows determination of the sequence of operator reactions in response to events and observe the resulting system behaviors across multiple sub-systems, to ascertain whether corrective actions achieved desired results or to verify that correct actions were taken according to plant procedures. An event data stream provides a source of information of determining patterns of behavior in a system for applications such as root cause analysis and forensics, improvement of standard operating procedures and predictive analytics.

According to some embodiments, an event in the event data format is only created upon a change of status data of an individual sensor or actuator to save on bandwidth and to focus on only the relevant information within the event data stream. To this end, a threshold for the change of a parameter underlying the event may be defined and an event is only generated if the parameter changes by more than the threshold. The threshold may be event specific or even different for multiple data sources/machines providing status data for identical event types. Upon generation of an event, the monitoring circuit 104 may optionally include status data from before the change and from after the change into the event as opposed to only include the present status data after occurrence of the event.

Optionally, event type information may be included into an event, the event type information indicating at least one category of a number of available event categories. To this end, not only the status data may be included but also a characterization of the status data to enable a user or an application at the remote server to only use or subscribe to certain types of events. Event types may directly relate to machinery such as for example an event indicating movement of a machine, reception of a new firmware, reception of a new configuration etc. Likewise, event types may also relate to the environment a machine is operated in, such as for example indicating temperature, humidity, sound pressure, vibration or the like. The event categories available in a particular implementation can be arbitrarily defined to fit the requirements of the machinery or of the production plant being monitored.

Optionally, meta data can be included into the event data format, the meta data indicating at least one of a format, a range, an order or a data type of the status data of the sensor or the actuator.

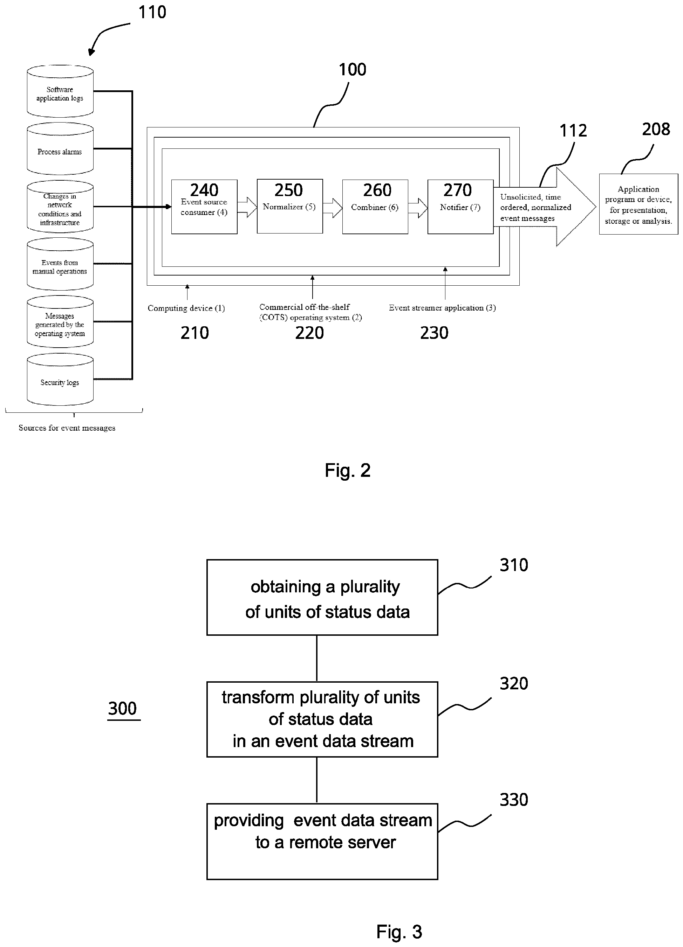

Fig. 2 illustrates a schematic view of an embodiment of a monitoring circuit 100, further illustrating some examples for sources of status data and also addressing some implementational aspects of an embodiment of a monitoring circuit 100.

An embodiment of a monitoring circuit 100 may be implemented using standard hardware (a computing device) 210 having, for example a processor, memory, solid-state or rotating disk storage, one or two or more Ethernet network interfaces. The monitoring circuit 100 may be implemented using software running on a Commercial Off-The-Shelf (COTS) operating system 220 to result with a cost effective implementation. A COTS operating system is a standard, pre-built, and readily available operating system that is sold in the marketplace to the general public. Unlike custom-built or bespoke operating systems designed for specific purposes or organizations, COTS operating systems are produced for a broad audience and wide array of general purposes. The COTS operating system runs on the computing device 210 to manage memory, storage and network interfaces, making these resources available to the software implementing the functionality of the monitoring circuit 100. The software implementing said functionality may also be called event streamer application 230.

Functionally, the event streamer application 230 may be separated in different modules, each module being defined by its functionality in the course of the generation of an event. However, said separation is just one example for an arbitrary number of choices as to how to describe the functionality and as to how to implement it in different software modules.

In the implementation of a monitoring circuit 100 illustrated in fig. 2, an Event source consumer function 240 is responsible for acquisition of input data for the purposes of generating events within an event data stream. That is, the Event source consumer function 240 receives the units of status data 110 of the plurality of sensors or actuators. The data sources themselves are external to the system as described and managed independently. Fig. 2 schematically illustrates how these data sources can reside in systems external to the computing device 210, with the units of status data being 110 obtained through existing common interfaces and data transfer methods. For monitoring machinery or a production plant, the data sources relate to the status of the machinery or to the status of the environment the machinery is operated in. However, the status data need not necessarily be generated by a machine directly to represent the status of a machine. For example, status data indicating an offline state or an online state of a machine may also be generated by a network switch. Likewise, Logs or messages from an operating system of infrastructure in the environment of the machinery or of the operating system of the machinery itself may be a source of status data 110. To this end, sources of information of that kind are also understood to be data sources serving as sensors to provide status data 110 of an environment of machinery to be monitored.

In another manifestation of the system, the sources of the units of status data 110 may fully or partially also reside within computing device 210. The location of the data sources providing status data can be arbitrary. Said data sources serving as sensors that are arranged in an environment of the machinery to provide status data 110 include but are not limited to application software logs, process alarms, operator actions, operating system logs, security logs and logs from network, peripheral systems and other infrastructure.

The method used for data acquisition form a specific data source is dependent on the capabilities of the data source and can include but are not limited to, database queries, messages acquired from standard industry protocols, file-based sources via file transfer protocol (FTP), proprietary APIs, local machine-readable files such as comma-separated value (CSV) files.

The event source consumer 240 function may implement multiple modules for handling communication with a variety of data source types. Separating the data acquisition functionality from other processing functions of a method to monitor a production plant may allow the event source consumer 240 to be modified to support future data source types without impacting interfaces and logic of other processing functions of the monitoring circuit 100 or of the method performed by the monitoring circuit 100.

According to some implementations, the event source consumer function 240 takes a unit of status data from a data source and adds a timestamp of receipt of the unit of status data into it. Further, Meta data describing the format, range and order of input data unit fields of the status data may optionally be added. The unit of status data augmented by said information may be called augmented data unit.

The augmented data unit is further processed by a normalizer function 250. The Normalizer function 250 is a component used for standardizing the format of the generated events included in the event data stream. The units of input or status data to be transformed into an event are different depending on the data source. A unit of status data of each particular source can have its own layout, its own number of data fields, own data sizes and data types. By means of the normalizer function 250, a monitoring circuit 100 generates events (event messages) using a fixed layout such that an event generated by the monitoring circuit 100 will always have the same format, independent of the data source. An exemplary implementation of the normalizer function 250 may achieve this through the following logic.

A translation function is used to convert and map the provided input of a status data unit into an internal data source neutral format. The data source neutral format may contain fixed data not provided by the data source itself, such as an event timestamp, a data source name, a classification (which is event type information classifying the event), source time and further flags. Furthermore, it contains placeholders for holding input data unit fields in a source agnostic way, such that common fields from diverse data sources will be mapped to the same column or data field within the data source neutral format. Meta data is provided together with each input unit of status data by the event source consumer 240 to describe the data format of the status data received, a range of the data fields and their order. Said information may be used to perform the translation of data fields and necessary data type conversion. The normalizer functionality may transform fields of input data to different data types, change the order of fields, omit fields provided by the data source or provide default values for fields not provided by the data source but required for generating an event according to the defined standard.

Often, an event generated by monitoring circuit 100 includes a time stamp added by the event source consumer 240 containing the time of receipt of the input data unit. If a field in the input unit of status data is identified as a timestamp field, this timestamp may be considered the most accurate time for event generation and this timestamp will be re-used, following any necessary conversion to the data source neutral data format. Otherwise, the time of receipt of the unit of status data as provided by the event source consumer 240 can be used as the timestamp of the event.

A mapping function for defining the format, range and order of fields described in an event to be generated by the monitoring circuit 100 can be defined by an implementer of a monitoring circuit 100. This information can be configured in the normalizer function 250 as initialization data before the system is started. The fields of the translated data units described in the internal data source neutral format will be selected and arranged according to the mapping function configuration, to create an event.

Afterwards, the generated event is passed to a combiner function 260. The combiner function 260 organizes the events into time sequence. The order in which units of status data 110 are provided to monitoring circuit 100 is not necessarily the order of their generation. Differences in receipt of units of status data may occur because of their origin from unrelated data sources as well as because of delays that may be caused by acquisition and processing of the data received within the units of status data. According to some implementations, a monitoring circuit 100 is intended to provide a best effort, time ordered sequence of events in an event data stream to allow an application at a remote server 208 to reliably visualize data and events in the correct order, while simplifying the logic in that the application is not required to apply a sorting logic on events received within the event data stream.

According to an exemplary implementation, this may be achieved by the following logic. Incoming events from the Normalizer 250 are buffered. The size of the buffer may be limited by available system memory. The maximum time an event will be buffered can be defined as a parameter during system initialization and start-up. A practical value can be used that allows sufficient time for data source access and buffering but does not allow events to become outdated. For example, an upper limit of one minute may be chosen. Events messages from the Normalizer 250 will be sorted in order of the event message timestamp field within the buffer as they arrive. Sorting the messages before passing them to a Notifier 270 allows the system be able to tolerate and compensate for delays in data processing and data source communications. The Notifier 270 implements functionality required to provide the event data stream 112 to the remote server 208. The buffer time defines the maximum time an event will be held in the buffer. When the buffer time for an event has expired the message may be passed to the Notifier 270. By design, the buffer time also influences or defines the time between the consumption of a unit if status data 110 from a data source and the time it is generated as an event within the event data stream 112 by the monitoring circuit 100.

According to some embodiments, the monitoring circuit 100 may operate on a best-effort basis. Events (event messages) arriving in the Combiner 260 with a time stamp earlier than the current time minus the buffer time may receive an indication in a flags field of the event that a message is "late". The timestamp may then be adjusted to the current time and the event may be sent to the Notifier 270 immediately. The "late" flag can, for example, be used as a quality indicator by the receiving application in the remote server 208 to identify an event that has not arrived in time order at the remote server 208.

The notification function of the notifier 270 may be implemented such as to send unsolicited, time ordered, normalized events to an application outside the system, e.g. a software running on a remote server. Separating the notifier functionality from other processing functions in the monitoring circuit 100 allows the event source consumer 240 to be modified to support future publishing methods, without impacting interfaces and logic of other processing functions in the software implementing the monitoring functionality of a monitoring circuit 100.

In a specific implementation, the notifier 270 may package the generated event into a JSON object and generate a message using Message Queuing Telemetry Transport (MQTT). MQTT is a commonly used open standard applied as a cloud connection technology and by IoT devices. MQTT is a lightweight messaging protocol suitable for small sensors and mobile devices. It's particularly effective in environments with limited network bandwidth or resources. MQTT works on a publish/subscribe model, which is highly scalable and enables one-to-many communication distributed across multiple clients.

While the previous paragraphs elaborate on a particular practical implementation, further embodiments of monitoring circuits 100 may implement one or more of the following alternatives to the previously described exemplary implementation.

The data sources and their generated units of status data supported by the event source consumer 240 could be extended to support new data sources and their associated data structures for status data in the future. A plug-in style architecture may allow addition of new data sources without affecting the overall structure and internal interfaces of the system and the monitoring circuit 100.

MQTT "topics" may be additionally supported such that the client-side application can subscribe to specific items of interest. The Notifier 270 may then be adapted to structure generated events into different categories using topics as a mechanism to allow the client to filter on specific event categories.

The Notifier 270 may be further adapted to support multiple further common, open and commercial electronic protocols for publishing event messages. Examples of these are Simple Text Oriented Messaging Protocol (STOMP), Hypertext Transfer Protocol (HTTP) push notification API and Kafka solutions. Kafka (Apache Kafka) is a distributed streaming platform that is designed to handle high volumes of data in real-time. Kafka is widely used in various industries for building real-time data pipelines and streaming applications. It's known for its high throughput, built-in partitioning, replication, and fault-tolerance capabilities. A further implementation would be to support a REST API interface to provide the events to the remote server 208.

As compared to an implementation using a predetermined data format for the events generated, the layout of generated events could be made customizable within the system. The generated event layout may so be tailored towards the constraints of the client-application.

Fig. 3 illustrates a flowchart of an embodiment of a method 300 to monitor a production plant that may, for example, be partly or fully operated by an embodiment of a monitoring circuit 100 illustrated in fig. 1 or 2.

The method comprises obtaining 310 a plurality of units of status data of a plurality of sensors or actuators, the plurality of sensors or actuators being part of a machinery or being arranged in an environment of the machinery.

The method further comprises transforming 320 the plurality of units of status data in an event data stream comprising a plurality of events. An event comprises information on at least one unit of status data.

The method further comprises providing 330 the event data stream to a remote server.

The previously discussed embodiments at least partly relate to systems and methods in the area of industrial operational supervision and monitoring technology for detecting, identifying, assembling, recording and transmitting a stream of in-sequence, time-ordered messages, pertaining to significant changes in hardware, software, operating system, network, storage, operational and environmental conditions of a controlled industrial process and its associated infrastructure. Information about these events can be provided electronically in near real-time as an unsolicited stream of messages in time order, identifying the time of the event occurrence, event source, location, category, instance, numeric or textual information about the conditions in the source both before and after the event occurred, as well as any other meta-data that may describe the event occurrence. Application software programs may choose to receive all events or only events that pass a filter based on one or more of the identifying information parts.

In the event of time-ordered events, they can be visually represented using methods similar to timeline-based applications such as trend displays, movie players and social media notifications. This enables correlations between events of the same or different types to be easily seen. Statistical analysis and aggregated calculations can be applied to the data such as determining maxima and minima and average events over a given time frame for post-mortem fault-finding and analysis. Patterns in the data can be used for determining the direction of system behavior and used for future system, process and safety related incident prevention.

Embodiments relate to the use of a dedicated or universal hardware or computer as an event detection, categorization and transmission system, for the purposes of notifying software applications about significant changes in a monitored system and its environment in near real-time.

While embodiments of monitoring circuits have been predominantly discussed in an application to monitor a production plant, further embodiments may likewise be used in other scenarios where different entities or machines provide data on their status, eventually in an unsynchronized way and using different data formats. For example, manufacturing plants, factories, ground or air traffic control systems or systems to aggregate information from multiple vehicles within an area may be an alternative data source. To this end, the term machinery is not restricted to machines used for production but should be understood to cover every technical machine or assembly capable to provide information about its status.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A monitoring circuit (100) comprising:
at least one interface (102) for obtaining status data (110) of a plurality of sensors or actuators (106) and for communicating with a remote server (108); and
processing circuitry (104) configured to
obtain a plurality of units of status data (110) of the plurality of sensors or actuators (106), the plurality of sensors or actuators (106) being part of machinery or being arranged in an environment of the machinery,
transform the plurality of units of status data (106) in an event data stream (112) comprising a plurality of events, an event comprising information on at least one unit of status data;
and
provide the event data stream (112) to the remote server (108).

2. The monitoring circuit of claim 1, wherein the processing circuitry (104) is further configured to include a timestamp associated to the status data into the events.

3. The monitoring circuit according to claim 1 or 2, wherein the processing circuitry (104) is further configured to obtain the plurality of status data (110) in at least a first data format or a different second data format.

4. The monitoring circuit of any one of claims 1 to 3, wherein the processing circuitry (104) is further configured to generate an event upon a change of status data (110) of an individual sensor or actuator (106).

5. The monitoring circuit of claim 4, wherein the processing circuitry (104) is further configured to include status data (110) from before the change and from after the change into the event.

6. The monitoring circuit of any one of claims 1 to 5, wherein the processing circuitry (104) is further configured to include event type information into an event, the event type information indicating at least one category of a number of available event categories.

7. The monitoring circuit of any one of claims 1 to 6, wherein the processing circuitry (104) is further configured to include meta data into the event, the meta data indicating at least one of a format, a range, an order or a data type of the status data of the sensor or the actuator.

8. The monitoring circuit of any one of claims 2 to 7, wherein the processing circuitry (104) is further configured to provide the event data stream (112) to the remote server as a series of the events in an order given by the timestamps.

9. A method (300) to monitor a production plant, comprising:
obtaining (310) a plurality of units of status data of a plurality of sensors or actuators, the plurality of sensors or actuators being part of a machinery or being arranged in an environment of the machinery,
transforming (320) the plurality of units of status data in an event data stream comprising a plurality of events, an event comprising information on at least one unit of status data; and
providing (330) the event data stream to a remote server.

10. The method of claim 9, further comprising;
including a timestamp associated to the status data into the events.

11. The method of claim 9 or 10, further comprising:
obtaining the plurality of status data in at least a first data format or a different second data format.

12. The method according to any one of claims 9 to 11, further comprising:
generating an event upon a change of status data of an individual sensor or actuator.

13. The method according to claim 12, further comprising:
including status data from before the change and from after the change into the event.

14. A monitoring system, comprising;
A monitoring circuit (100) according to any one of claims 1 to 8; and
A remote server (108) communicating with the monitoring circuit (100) via the internet.

15. A computer program having a program code for performing the method of any one of claims 9 to 14, when the program code is executed on a computer, a processor, or a programmable hardware component.
